# EUROPEAN PATENT SPECIFICATION

(11) **EP 4 359 335 B1**
(45) Date of publication and mention of the grant of the patent: **30.04.2025**
(21) Application number: 22754913.6
(22) Date of filing: 23.06.2022
(51) Int. Cl.: B65H 20/06, B23K 26/08, B23K 26/38, B23K 26/70, B65G 15/30, B65G 45/12, B65G 45/22, B65G 45/24

(54) **VACUUM CONVEYOR, A METHOD FOR CLEANING A VACUUM CONVEYOR AND A LASER PUNCHING DEVICE COMPRISING A VACUUM CONVEYOR**
VAKUUMFÖRDERER, VERFAHREN ZUM REINIGEN EINES VAKUUMFÖRDERERS UND LASERSTANZVORRICHTUNG MIT EINEM VAKUUMFÖRDERER
CONVOYEUR À VIDE, PROCÉDÉ DE NETTOYAGE D'UN CONVOYEUR À VIDE ET DISPOSITIF DE POINÇONNAGE LASER COMPRENANT UN CONVOYEUR À VIDE

(30) Priority: 25.06.2021 PL 43827121
(43) Date of publication of application: 01.05.2024
(73) Proprietor: Grafotronic SP. Z O.O., 03-236 Warszawa (PL)
(72) Inventor: SKROBIK, Tomasz, 02-735 Warszawa (PL); ONIEWSKI, ukasz, 05-270 Marki (PL)
(74) Representative: JWP Patent & Trademark Attorneys
(86) International application number: PCT/IB2022/055817
(87) International publication number: WO 2022/269524

(56) References cited:
- EP-A1- 2 258 639
- EP-A2- 1 918 115
- DE-A1- 102018 119 971

## Description

The present invention relates to a vacuum conveyor, a method for cleaning a vacuum conveyor, and a laser punching device comprising a vacuum conveyor. The objects of the invention are applicable to devices for cutting out pieces from a web of material in order to transport a web of material, especially in devices for laser cutting out labels from a web of material.

A particular use of vacuum conveyors is utilizing them in devices for cutting pieces from a web of material, especially for cutting labels. In that case, vacuum conveyors with steel belts are used. There are several types of laser cutting out pieces with an adhesive layer, which are matched according to the specific product. Pieces with an adhesive layer can be cut out from the web of material through from the side of the adhesive, through from the side of the print or also from the side of the print, but without damaging the base. It should be pointed out that in solutions of the prior art, in one device for cutting out pieces, it is possible to transport the web of material by means of a vacuum conveyor either clockwise or counter-clockwise. Such configuration of the vacuum conveyor operation ensures, therefore, that at most two of the three existing techniques for cutting out pieces can be implemented using one device.

During one production process, it is sometimes necessary to use each of the three methods of label production. This raises the problem of adding more device modules capable of implementing other types of production or installation of a new device.

In addition, when cutting out pieces with an adhesive layer from the web of material both on the side of the adhesive, and on the side of the print, the transport belt accumulates sludge and burnt material. Such debris causes the surface of the transport belt, on which the web of material is placed, to be uneven, so that the cutting of labels is not sufficiently precise. In addition, the sludge and residue of the burnt material are deposited on the surface of the web of material, which results in the obtained cut-out pieces being soiled. The existing methods of cleaning the transport belt require the device to be switched off during cleaning, which entails stopping the production process and thus slowing down and reducing the production efficiency. In addition, known methods of cleaning the transport belt are intended for vacuum conveyors operating either clockwise or counter-clockwise. There is, therefore, no automatic cleaning method available which can be used for two-way vacuum conveyors.

US2006191426A1 discloses an arrangement and a method for producing printed sheet packets that can be used, inter alia, to produce labels. The system includes, in particular, a substrate material transition area, a printing module, a cutting module, a collection module, a conveyor module, and a packing module. The cutting module may include, for example, a laser cutter, a rotary cutter, a sheet cutter, and the like, or combinations thereof. In a preferred embodiment, the cutting module that comprises the laser cutter cuts single printed sheets from the web of material. As a result, ready cut-out sheets and waste in the form of a waste matrix are obtained. In another embodiment, the laser cutter cuts sheets from stacked sections of material. In addition, the depth of laser cutting is adjustable. Therefore, it is possible to cut the web through or without damaging the base.

US6695501B2 describes a printing and label application system that comprises an improved digital print assembly, a cutting assembly, and a label application assembly. The label cutting assembly is equipped with an adhesive applicator, a laser cutter and a label application device. A suitable pattern is printed on the web of material of the digital printing assembly. The web is then moved to the cutting assembly where the laser cutting of the labels from the print side takes place. As a result, the finished product is obtained in the form of single labels and a matrix, which is waste. The labels are transported on a vacuum conveyor, clockwise, to the star knob.

US2021086296A1 describes a method and device for laser cutting a sheet of material. In the cited solution, the cutting device is equipped with a laser scanner that moves perpendicularly to the direction of movement of the sheet of material. A mechanism is provided for displacing the material for proper positioning and keeping it stationary during cutting. Preferably, the material displacement mechanism is provided with a conveyor belt which, thanks to the vacuum system, keeps the sheet of material stationary on the surface of the belt. The conveyor belt provides a fully controlled movement of the material through the laser cutting area. In one embodiment, the conveyor belt comprises a metal mesh whose open structure allows air to be sucked through the surface of the belt. Furthermore document EP 2 258 639 discloses a vacuum conveyor for transporting a web of material with a mechanical cleaning system and a chemical cleaning system.

The technical problem faced by the present invention is to propose such a vacuum conveyor and a laser punching device equipped with such a conveyor which will ensure the possibility of cutting out pieces from a web of material on one device in three ways. It is desirable that one device can be used to implement cutting out of labels through from the adhesive side, through from the print side, or cutting out from the print side without damaging the base, with minimal interference of personnel operating the device related to retooling the device to a different mode of operation. In addition, it is desirable that the vacuum conveyor be cleaned automatically while maintaining the continuity of operation of the device. Furthermore, it is desirable that the cleaning method provides a more accurate removal of debris relative to existing solutions and can be carried out during the cutting out of pieces from the web of material using each of the three methods of piece cutting.

In one aspect, the present invention provides a vacuum conveyor for transporting a web of material according to claim 1.

Preferably, at least one belt tension actuator is connected to the longitudinal axis of the tension drum on each side thereof for moving the tension drum relative to the drive drum and for tensioning and guiding the transport belt.

Preferably, the vacuum conveyor comprises mounting openings along its upper longitudinal edges.

According to the invention, the vacuum means comprise at least one vacuum chamber arranged on the upper inner side of the transport belt underneath the sliding table, wherein a pump is connected to the vacuum chamber to create a vacuum, and longitudinal slots are formed in the sliding table along its entire width and length to provide airflow between the sliding table and the vacuum chamber.

Preferably, the surface of the transport belt comprises microperforations arranged in even rows placed transversely to the length of the transport belt along its entire length, which overlap the slots of the sliding table.

Preferably, the vacuum conveyor comprises a belt guiding sensor for detecting the overlap of slots on the sliding table with the microperforations of the transport belt.

Preferably, the mechanical cleaning system comprises at least two doctor blades for scraping debris off the transport belt, arranged transversely to the transport belt, on the lower outer side thereof, and are inclined at an angle α relative to the transport belt, wherein the tips of the doctor blades face away from each other, wherein the doctor blades are independently controlled.

Preferably, each doctor blade is provided with a pressure cylinder for pressing or releasing the pressure thereof, depending on the working direction of the vacuum conveyor, wherein at least two pressure rollers are arranged in contact with the lower inner surface of the transport belt to maintain the position of the transport belt without deformation.

Preferably, the doctor blade further comprises a geared motor for giving it a linear movement transverse to the transport belt.

Preferably, the angle α is from 10° to 90°.

Preferably, the chemical cleaning system comprises a brush roller arranged under the lower outer surface of the transport belt, which rotates in the direction according to the transport belt rotation, an application nozzle applying a cleaning agent to the brush roller, and a suction pump for extracting the residue of the cleaning agent.

Preferably, at least two rubber pullers are located on both sides of the brush roller, along the transverse axis of the transport belt, for collecting excess cleaning agent.

In another aspect, the present invention provides a method for cleaning the vacuum conveyor according to the first aspect of the invention, characterized in that it includes the steps in which:
a) debris is scraped off by doctor blades,
b) the cleaning agent is sprayed by the application nozzle onto the brush roller,
c) debris is removed by a rotating brush roller with a cleaning agent,
d) excess cleaning agent is collected by the rubber pullers from the surface of the transport belt.

Preferably, the suction pump extracts the cleaning agent residue.

Preferably, during the counter-clockwise movement of the transport belt, the left doctor blade is pressed and the right doctor blade is released, while during the clockwise movement of the transport belt, the right doctor blade is pressed and the left doctor blade is released.

Preferably, during the counter-clockwise movement of the transport belt, the brush roller rotates counter-clockwise, while during the clockwise movement of the transport belt, the brush roller rotates clockwise.

In a further aspect, the present invention provides a laser punching device comprising a main body, transport rollers arranged on the main body, a laser system, a winder, an unwinder, and functional rollers, characterized in that it comprises the vacuum conveyor according to the first aspect of the invention.

Preferably, the functional rollers constitute a guide roller for the web of material, a waste matrix roller, a delamination roller, and/or a lamination roller.

Preferably, the functional rollers are mounted in mounting openings.

The vacuum conveyor, the method for cleaning the vacuum conveyor and the laser punching device comprising the vacuum conveyor provide the possibility of laser punching of pieces from the web of material, especially labels, in a clockwise or counter-clockwise mode of operation. This mode of operation is ensured by a system of belt guiding, belt cleaning and scraping of debris, which operate in both directions. All components needed for calibration and laser punching are also arranged to allow the device to operate in both directions. The vacuum conveyor contains mounting openings along the side edges intended for mounting rollers for guiding the web of material, pulling the waste matrix, unsticking the carrier and laminating the material. The rollers can be mounted in various places along the entire length of the vacuum conveyor, which provides the possibility of retooling the device to any type of punching of pieces from the web of material.

A particularly important component of the vacuum conveyor is the mechanical cleaning system and the chemical cleaning system, which constitute the two-step automatic cleaning system of the vacuum conveyor. The first step of the two-step cleaning of the vacuum conveyor of the present invention is to mechanically remove debris in the form of hardened and burnt adhesive from the surface of the transport belt of the vacuum conveyor. This removal of debris is implemented by scraping it off with doctor blades. Chemical cleaning constitutes spraying the cleaning agent onto a brush roller with a hard bristle, which rotates in the direction according to the transport belt rotation. The brush roller cleans the surface of the transport belt by spreading the cleaning agent on its outer surface and by rotating it by scraping off the remaining debris. Through the microperforations in the transport belt, the cleaning agent also enters the inner surface of the transport belt. Upon contact with the web of material, the cleaning agent may cause damage to it, so a rubber puller system has been used to remove the cleaning agent from the surface of the transport belt. In addition, a suction pump is used to ensure complete drying of the transport belt surface and removal of the cleaning agent residue. Cleaning is carried out on an ongoing basis during the operation of the device, ensuring its continuity of operation.

An additional advantage of using two-step automatic cleaning is that the debris constituting the laser cutting residue, present on the surface of the transport belt, is removed and does not cause damage to the web of material nor contaminates its surface. As a result, a finished product of high quality is obtained, and the operation of the device is more efficient compared to the known solutions in the state of the art.

By way of the solutions of the invention, it is possible to produce pieces cut from a web of material by means of one device in three ways: through from the adhesive side, through from the print side, or also from the print side, but without damaging the base. Therefore, it is not necessary to provide additional devices or modules that implement each of the three types of production separately. This is advantageous in terms of saving space, costs and time. The solution provides the possibility of quick and uncomplicated retooling of the device for switching the type of operation.

It should be emphasized that materials intended for laser punching require the use of other types of punching depending on their properties. Implementing any type of punching on a single device provides the possibility to choose the best type of punching for a given material. As a result, the obtained product is free from defects related to the type of production.

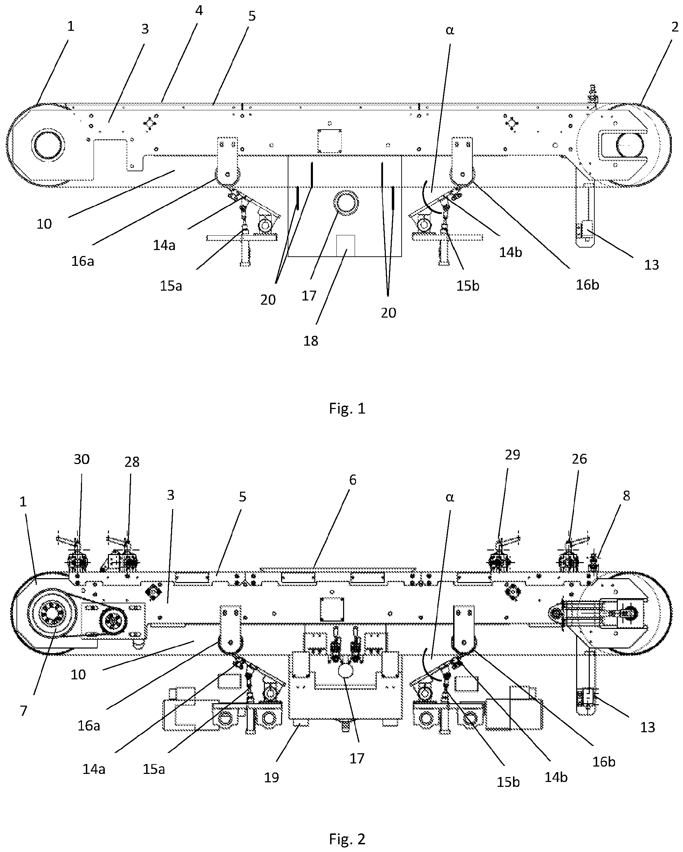

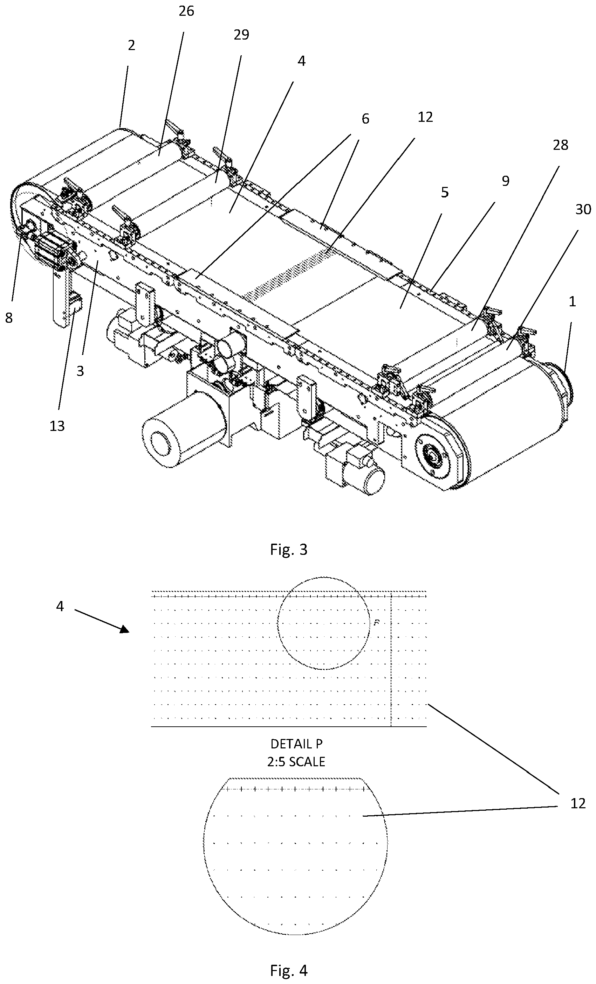

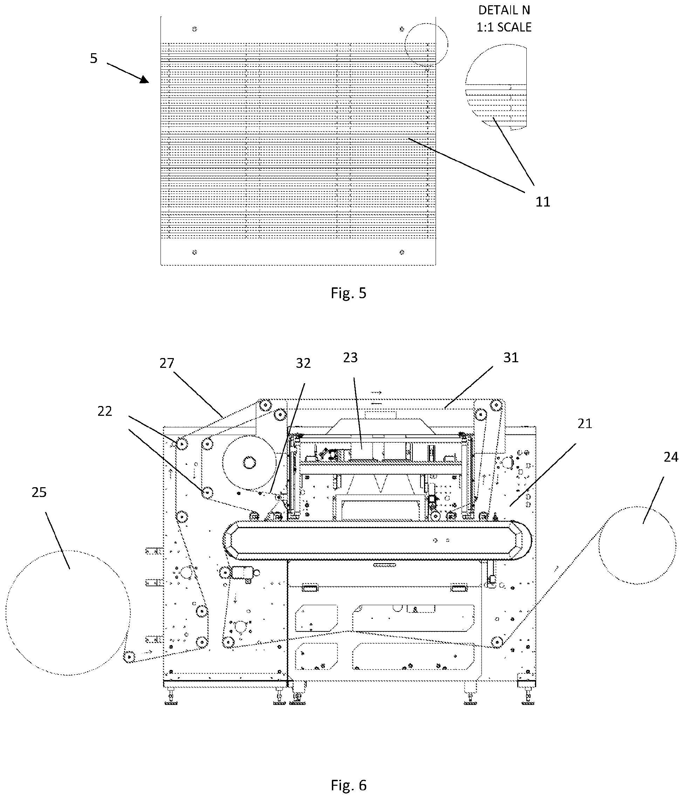

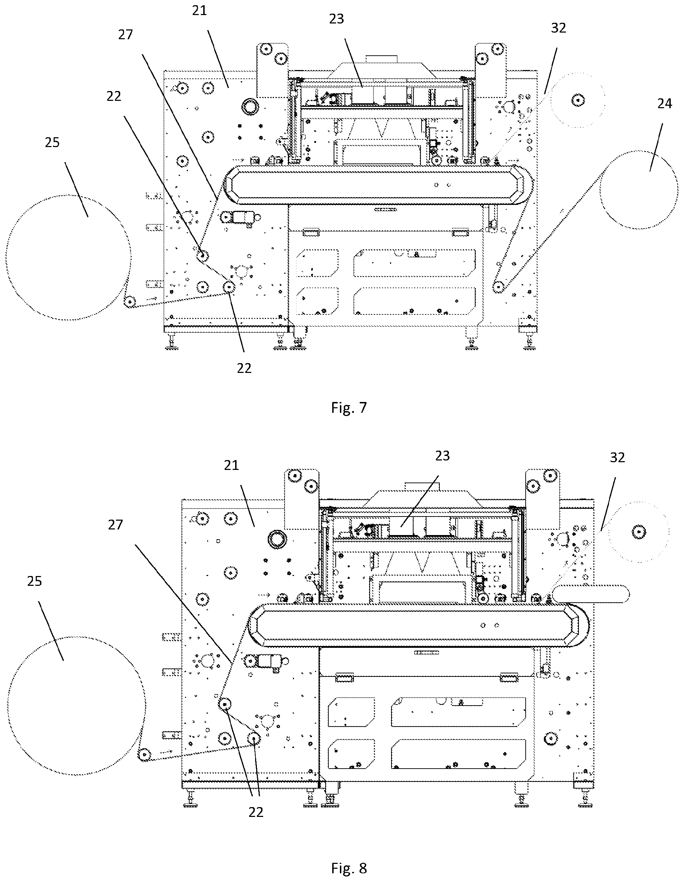

The solution of the present invention is set forth in the following embodiments and illustrated in the drawings, wherein Fig. 1 shows a schematic side view of the vacuum conveyor according to the first embodiment, Fig. 2 shows a side view of the vacuum conveyor constituting a detail of the vacuum conveyor of Fig. 1, Fig. 3 shows an axonometric view of the vacuum conveyor of Fig. 1 and Fig. 2, Fig. 4 shows the arrangement of the microperforations on the surface of the transport belt, Fig. 5 shows the arrangement of the slots of the sliding table, Fig. 6 shows a schematic side view of a laser punching device in a punching through from the adhesive side mode, Fig. 7 shows a schematic side view of the laser punching device of Fig. 6, in the punching from the print side without damaging the base mode, while Fig. 8 shows a schematic side view of the laser punching device of Fig. 6 and Fig. 7, in the punching through from the print side mode.

### Example 1

The vacuum conveyor constituting the embodiment of the present invention is shown schematically in Fig. 1, Fig. 2 and Fig. 3. The conveyor comprises a drive drum 1 and a tension drum 2 which are arranged between two fastening plates 3. The transport belt 4 is stretched between the drive drum 1 and the tension drum 2. Also, an additional sliding table 5 which remains in contact with the upper inner side of the transport belt 4 is arranged between the drive drum 1 and the tension drum 2. The transport belt 4 is covered with a microperforation 12, while the sliding table 5 has slots 11 provided on the surface thereof. As shown in Fig. 4, the microperforations 12 are in the shape of substantially circular openings of a diameter of 0.3 mm and are arranged in even rows arranged transversely relative to the length of the transport belt 4 over the entire length thereof. The openings in the rows are equidistant from each other by 10 mm. In addition, the rows are located at a fixed distance from each other, which is 5 mm. As shown in Fig. 5, the slots 11 of the sliding table 5 are arranged longitudinally over its entire surface and their width is 5 mm. The distances between the adjacent edges of the individual slots 11 equal 5 mm. The slots 11 of the sliding table 5 and the microperforations 12 of the transport belt 4 overlap to provide airflow and immovably maintain transported components. Such an arrangement of the transport belt 4 relative to the sliding table 5 occurs during proper belt guiding when the openings in the transport belt 4 overlap the slots 11 of the sliding table 5.

It should also be emphasized that the size and arrangement of the openings of the microperforation 12 in the transport belt 4 do not limit the scope of the present invention, and in alternative embodiments, the openings may have a smaller or larger diameter, e.g. 0.2 mm, 0.4 mm or 0.5 mm, their distance from each other in rows may be smaller or larger and may be 5 mm, 7 mm, 13 mm or 15 mm, and the distance between the rows may also be larger or smaller and may be 3 mm, 7 mm or 10 mm, provided that proper belt guidance is maintained. Similarly, the width of the slots 11 in the sliding table 5 and their distances between each other do not constitute a limitation to the present invention, and in alternative embodiments may be smaller or larger, so the width of the slots 11 may be 3 mm or 10 mm, and the distance between the adjacent edges of the slots 11 may be 3 mm or 10 mm, provided that proper belt guiding is maintained.

On the upper outer surface of the transport belt 4, in the area of its side edges, two sliding flats 6 are permanently fixed, which align the surface of the sliding web 27 of material. It should be emphasized that the number of sliding flats 6 does not limit the scope of the present invention, and in alternative embodiments, it is possible to use a larger number of sliding flats 6 while ensuring effective removal of bends resulting from tensioning of the transport belt 4. In addition, the vacuum conveyor is equipped with a drive 7 which ensures its two-way operation. In the present embodiment, the conveyor drive 7 is a servo-motor-type drive which is connected to the drive drum 1 by a belt transmission.

Meanwhile two belt tensioning actuators 8 are connected to the longitudinal axis of the tension drum 2, one on each side of the tension drum 2, for moving the tension drum 2 relative to the drive drum 1. As a result of increasing the distance between the drive drum 1 and the tension drum 2, the transport belt 4 is tensioned. In this embodiment, the belt tension actuator 8 is a pneumatic actuator. However, the type and number of belt tensioning actuators 8 do not limit the scope of the present invention, and in alternative embodiments, the belt tensioning actuators 8 may constitute actuators of another type, e.g. hydraulic actuators, electric actuators, etc., and it is possible to use a larger number of belt tensioning actuators 8, e.g. three, four, provided that the correct guidance and tensioning of the transport belt 4 is maintained. The connection between the longitudinal axis of the tension drum 2 and the belt tensioning actuator 8 is an articulated connection. In this embodiment it is a ball connection, however, it does not limit the scope of the invention, and in alternative embodiments it may constitute another type of articulated connection, while providing compensation of the geometric conditions between functionally connected components such that the transport belt 4 remains tensioned and the web 27 surface of the material does not wrinkle and remains stationary relative to the transport belt 4. Additionally, as shown in Fig. 3, along the upper longitudinal edges of the vacuum conveyor, mounting openings 9 are arranged to which functional rollers are mounted in a configuration suitable for the selected type of punching of pieces from the web 27 of the material.

The vacuum conveyor according to the present embodiment of the invention is equipped with vacuum means for ensuring proper operation of the device, consisting of holding a web 27 of material on the surface of the transport belt 4 by means of suction thereof. In this embodiment, the vacuum means comprise three vacuum chambers 10: middle, left and right, arranged on the upper inner side of the transport belt 4 under the sliding table 5. A pump is connected to the vacuum chambers 10 to produce a vacuum. The number of vacuum chambers 10 does not limit the scope of the invention, and in alternative embodiments, more or less vacuum chambers 10 may be mounted, e.g., one, two, four, provided that it ensures the correct attraction of the transported material on the transport belt 4, so that the transported material does not change its position relative to the transport belt 4.

Further, as shown in Fig. 1, the vacuum conveyor comprises a belt guiding sensor 13 which is arranged at the bottom part of the vacuum conveyor. It is responsible for monitoring the position of the transport belt 4 and determining whether it is correct such that the slots 11 on the sliding table 5 overlap the microperforations 12 of the transport belt 4. If the transport belt 4 is shifted too far in one direction such that there is no overlap between the slots 11 on the sliding table 5 and the microperforations 12 of the transport belt 4, the belt guiding sensor 13 sends information to the control system (not shown) and then the actuator pressure control regulator 8 of the belt tension sets the correct pressure value to ensure the desired tension and guidance of the transport belt 4.

The vacuum conveyor is also equipped with a mechanical cleaning system and a chemical cleaning system. As shown in Fig. 1 and Fig. 2, the mechanical cleaning system includes two doctor blades: a left doctor blade 14a and a right doctor blade 14b. Each doctor blade 14a, 14b at one end is provided with a semi-swing connection and a pressure actuator 15a, 15b to provide independent pressing or releasing of the pressure relative to the surface of the transport belt 4. When the transport belt 4 moves clockwise, the right doctor blade 14b is pressed (active position) and the left doctor blade 14a is not in contact with the transport belt 4 (rest position). As the transport belt 4 moves counter-clockwise, the left doctor blade 14a is pressed and the right doctor blade 14b moves to the rest position. In the active position, the tip of the respective doctor blade 14a, 14b is in contact with the transport belt 4 from its lower outer side. In addition, the left pressure roller 16a and the right pressure roller 16b are arranged in contact with the lower inner surface of the transport belt 4, which, when the respective doctor blade 14a, 14b is placed in the active position, maintain the position of the transport belt 4 without deforming it. Furthermore, each doctor blade 14a, 14b is inclined relative to the transport belt 4 at an angle of α = 30°, the tips of doctor blades 14a, 14b facing away from each other. Such an arrangement of doctor blades 14a, 14b provides the possibility of scraping debris off during operation of the device regardless of its working direction.

It should be emphasized that the number of doctor blades 14a, 14b does not limit the scope of the invention, and in alternative embodiments, more doctor blades 14a, 14b, e.g. three, four, five, may be installed while maintaining effective removal of debris from the transport belt 4. Moreover, the angle α of the inclination of the doctor blades 14a, 14b also does not constitute a limitation of the invention and in alternative embodiments may be more or less, e.g., 20°, 40°, 50°, 90°, provided that it is possible to effectively remove debris from the transport belt 4. The pressure actuators 15a, 15b in this embodiment constitute pneumatic actuators, but this is not a limitation of the present invention as in the case of the type of actuators 8 of the belt tensioning. In addition, the doctor blades 14a, 14b are equipped with a geared motor, which gives them a linear lateral movement, transverse to the transport belt 4. This makes it easier to scrape off debris and does not introduce loads when the transport belt 4 is moving. Debris falls into an easily removable container.

Additionally, the vacuum conveyor comprises the chemical cleaning system shown in Fig. 1 and Fig. 2, wherein the second step of debris removal is implemented. The chemical cleaning system has a brush roller 17 arranged under the lower outer surface of the transport belt 4. When the transport belt 4 moves clockwise, the brush roller 17 rotates in the same direction, while when the transport belt 4 moves in the opposite direction, the brush roller 17 rotates counter-clockwise. Furthermore, the chemical cleaning system comprises an application nozzle 18 that sprays the cleaning agent onto the brush roller 17. It is worth noting that the application nozzle 18 of the cleaning agent is provided with an electrovalve which operates to regulate the feed stream of the cleaning agent and control its frequency. The chemical cleaning system further comprises a suction pump 19 that extracts the residue of the cleaning agent, which is then directed to a tank for the residue of the cleaning agent, which is arranged under the vacuum conveyor. Additionally, four rubber pullers 20 are provided along the transverse axis of the transport belt 4. The rubber pullers 20 are arranged two at a time on the lower outer and inner surface of the transport belt 4. They are provided for collecting excess cleaning agent from the transport belt 4 regardless of the working direction of the vacuum conveyor. It should be emphasized that the location and number of rubber pullers 20 does not constitute a limitation to the scope of the present invention, and in alternative embodiments, they may be located only on the outer or only on the inner surface of the transport belt 4, and there may be more or fewer of them, e.g., one, two, three, five.

### Example 2

An embodiment of the laser punching device according to the present invention is shown in Fig. 6. Since the laser punching device comprises a conveyor as described in Example 1, a detailed description of the structure thereof will be omitted for clarity of disclosure.

The laser punching device further comprises a main body 21 to which its individual components are mounted. Additionally, the device is provided with transport rollers 22, arranged on the main body 21, through which the web 27 of material is guided. In the central area of the device there is a laser system 23 which is adapted to punch one layer of the web 27 of material or all of the material through. The web 27 of material to be processed is fed to the vacuum conveyor from the unwinder 25, while the finished product is directed to the winder 24. Important pieces of the device are the functional rollers, which constitute the guiding roller 26 of the web 27 of material, the waste matrix 32 roller 28, the delamination roller 29, and/or the lamination roller 30. These rollers are mounted in the vacuum conveyor in mounting openings 9 specially designed for this purpose.

The first type of laser punching is implemented on the device - punching pieces through from the adhesive side. The operating mode of the laser punching device depends on the arrangement of the functional rollers and thus on the guiding of the web 27 of material on them. The process of punching the pieces through from the adhesive side consists of the web 27 of material being directed over the laser system 23 and is introduced onto the vacuum conveyor in the opposite direction to the direction of transport of the finished pieces (from right to left). In this solution, the transport belt 4 moves counter-clockwise. A base 31 is delaminated from the web 27 of material, which in this embodiment constitutes paper coated with silicone. The upper layer of material with printed pieces is then sucked onto the transport belt 4 and the base 31 is directed over the laser system 23 over the main web 27 of material. The pieces are punched through from the adhesive side with a laser.

The next step is to separate the waste matrix 32 from the finished pieces. By way of the vacuum, the cut-out pieces are transported to the place of reconnection with the previously delaminated base 31. Importantly, the cut-out pieces do not completely change their position due to the vacuum holding them, and the re-lamination is performed on the transport belt 4 after removing the waste matrix 32. The base 31, together with the cut labels, is transported in the direction of the winder 24 opposite to the movement direction of the web 27 of material for punching pieces.

In this embodiment, the transport belt 4 moves counter-clockwise. For proper and continuous operation of the device, the mechanical cleaning system and the chemical cleaning system are actuated, which are described in detail in the first embodiment. Due to the movement direction of the transport belt 4, in the case of mechanical cleaning only the left doctor blade 14a is pressed against the surface of the transport belt 4 by the use of the left pressure actuator 15a. The tip of the left doctor blade 14a is thus in the active position ensuring that debris is scraped off the surface of the transport belt 4 over its entire width. The right blade 14b, on the other hand, is displaced by means of the right pressure actuator 15b so that it is not in contact with the surface of the transport belt 4. The scraped off debris falls into the debris container.

The next cleaning step is the chemical cleaning implemented by the chemical cleaning system. First, a cleaning agent is applied to the brush roller 17 from the application nozzle 18. The brush roller 17 then, by rotating counter-clockwise, removes debris from the surface of the transport belt 4. The residue of the cleaning agent is collected by the rubber pullers 20 and then directed to the tank.

### Example 3

An embodiment of the laser punching device according to the present invention is shown in Fig. 7. Due to the fact that the laser punching device comprises a vacuum conveyor as described in the Example 1 and other components converging as in the Example 2, a detailed description of the structure thereof will be omitted for clarity of the disclosure.

In this embodiment, punching labels from the web 27 of material from the print side without damaging the base 31 is implemented on the laser punching device, referred to in the art as a *kiss cut.* The movement direction of the web 27 of material and the transport belt 4 is clockwise. In this embodiment, only the top side of the printed material is punched, without damaging the base 31. In the final phase, the waste matrix 32 is separated from the labels. The product, however, is a full base 31 with punched labels glued.

In the third embodiment, the transport belt 4 moves clockwise. The vacuum conveyor is also provided with a mechanical cleaning system and a chemical cleaning system as described in detail in the first embodiment. With such a configuration of the vacuum conveyor operation, in order to remove debris from the transport belt 4, the right doctor blade 14b is pressed against the surface of the transport belt 4. The left doctor blade 14a, on the other hand, is displaced from the surface of the transport belt 4. Just like the second example, the scraped off debris falls into the debris container.

The next cleaning step is the chemical cleaning implemented by the chemical cleaning system. The chemical cleaning process proceeds in the same way as in the second example, with the difference that the brush roller 17 rotates in the opposite direction due to a change in the movement direction of the transport belt 4.

### Example 4

An embodiment of the laser punching device according to the present invention is shown in Fig. 8. Due to the fact that the laser punching device comprises a vacuum conveyor as described in the Example 1 and other components essentially converging as in the Example 2 and 3, a detailed description of the structure thereof will be omitted for clarity of the disclosure. It should be emphasized that in this embodiment, the laser punching device does not include a winder 24 as in the second and third examples.

The laser punching device, similarly to the third embodiment, is intended for laser punching labels.

The cutting of labels through from the print side is implemented on the laser punching device. In this embodiment, the transport belt 4 moves clockwise, that is, it transports the web 27 of material and the punched labels from its left side to its right side. The laser cuts the web 27 of material through (top layer and base 31). As in the third embodiment, the waste matrix 32 is separated from the labels. In order to receive the ready labels, the vacuum in the right vacuum chamber 10 is disconnected, as a result of which the ready labels are not attracted to the transport table 4 in this area. This ensures that they can be picked up or sorted from the transport belt 4 in different ways - e.g. by a robot, collected in a container at the end of a vacuum conveyor or transferred by an additional vacuum conveyor.

**List of reference numerals:**
- 1 -: drive drum,
- 2 -: tension drum,
- 3 -: fastening plates,
- 4 -: transport belt,
- 5 -: sliding table,
- 6 -: sliding flats,
- 7 -: conveyor drive,
- 8 -: belt tensioning actuator,
- 9 -: mounting openings,
- 10 -: vacuum chamber,
- 11 -: slots,
- 12 -: microperforations,
- 13 -: belt guiding sensor,
- 14a -: left doctor blade,
- 14b -: right doctor blade,
- 15a -: left pressure actuator,
- 15b -: right pressure actuator,
- 16a -: left pressure roller,
- 16b -: right pressure roller,
- 17 -: brush roller,
- 18 -: application nozzle,
- 19 -: suction pump,
- 20 -: rubber pullers,
- 21 -: main body,
- 22 -: transport rollers,
- 23 -: laser system,
- 24 -: winder,
- 25 -: unwinder,
- 26 -: guide roller,
- 27: - web of material,
- 28 -: waste matrix roller,
- 29 -: delamination roller,
- 30 -: lamination roller,
- 31 -: base,
- 32 -: waste matrix.

## Claims

1. A vacuum conveyor for transporting a web (27) of material, comprising a drive drum (1) and a tension drum (2) arranged between two fastening plates (3), a transport belt (4) stretched between the drive drum (1) and the tension drum (2), a sliding table (5) arranged between the drive drum (1) and the tension drum (2) in contact with the upper inner side of the transport belt (4), at least two sliding flats (6) arranged on the upper outer surface of the transport belt (4) in the area of its side edges, vacuum means and a conveyor drive (7), wherein the conveyor drive (7) constitutes a two-way drive, wherein the vacuum conveyor further comprising a mechanical cleaning system and a chemical cleaning system, **characterized in that** the vacuum means comprise at least one vacuum chamber (10) arranged on the upper inner side of the transport belt (4) underneath the sliding table (5), wherein a pump is connected to the vacuum chamber (10) to create a vacuum, and longitudinal slots (11) are formed in the sliding table (5) along its entire width and length to provide airflow between the sliding table (5) and the vacuum chamber (10).

2. The vacuum conveyor according to claim 1, **characterized in that** at least one belt tensioning actuator (8) is connected to the longitudinal axis of the tension drum (2) on each side thereof for moving the tension drum (2) relative to the drive drum (1) and for tensioning and guiding the transport belt (4).

3. The vacuum conveyor according to any of the claims 1-2, **characterized in that** the surface of the transport belt (4) comprises microperforations (12) arranged in even rows placed transversely to the length of the transport belt (4) along its entire length, which overlap the slots (11) of the sliding table (5).

4. The vacuum conveyor according to any of the claims 1-3, **characterized in that** it comprises a belt guiding sensor (13) for detecting the overlap of slots (11) on the sliding table (5) with the microperforations (12) of the transport belt (4).

5. The vacuum conveyor according to any of the claims 1-4, **characterized in that** the mechanical cleaning system comprises at least two doctor blades (14a, 14b) for scraping debris off the transport belt (4), arranged transversely to the transport belt, on the lower outer side thereof, and are inclined at an angle a relative to the transport belt (4), wherein the tips of the doctor blades (14a, 14b) face away from each other, wherein the doctor blades (14a, 14b) are independently controlled.

6. The vacuum conveyor according to claim 5, **characterized in that** each doctor blade (14a, 14b) is provided with a pressure actuator (15a, 15b) for pressing or releasing the pressure thereof depending on the working direction of the vacuum conveyor, wherein at least two pressure rollers (16a, 16b) are arranged in contact with the lower inner surface of the transport belt (4) for maintaining the position of the transport belt (4) without its deformation.

7. The vacuum conveyor according to any of the claims 5-6, **characterized in that** the doctor blade (14a, 14b) further comprises a geared motor for giving it a linear movement transverse to the transport belt (4).

8. The vacuum conveyor according to any of the claims 5-7, **characterized in that** the angle a is from 10° to 90°.

9. The vacuum conveyor according to any of the claims 1-8, **characterized in that** the chemical cleaning system comprises a brush roller (17) arranged under the lower outer surface of the transport belt (4), which rotates in the direction according to the transport belt (4) rotation, an application nozzle (18) for applying the cleaning agent onto the brush roller (17), and a suction pump (19) for extracting the cleaning agent residue, and wherein at least two rubber pullers (20) are located on both sides of the brush roller (17), along the transverse axis of the transport belt (4), for collecting excess cleaning agent.

10. A method for cleaning the vacuum conveyor as defined in the claim 9 when dependent on any of claims 5-8, **characterized in that** it includes steps in which:
a) debris is scraped off by the doctor blades (14a, 14b),
b) a cleaning agent is sprayed onto the brush roller (17) by the application nozzle (18),
c) debris is removed by a rotating brush roller (17) with the cleaning agent,
d) excess cleaning agent is collected from the surface of the transport belt (4) by the rubber pullers (20).

11. The method for cleaning the vacuum conveyor according to claim 10, **characterized in that** the cleaning agent residue is extracted by a suction pump (19).

12. The method for cleaning the vacuum conveyor according to any of the claims 10-11, **characterized in that** during the counter-clockwise movement of the transport belt (4), the left doctor blade (14a) is pressed and the right doctor blade (14b) is released, wherein during the clockwise movement of the transport belt (4), the right doctor blade (14b) is pressed and the left doctor blade (14a) is released

13. The method for cleaning the vacuum conveyor according to any of the claims 10-12, **characterized in that** during the counter-clockwise movement of the transport belt (4), the brush roller (17) rotates counter clockwise, wherein during the clockwise movement of the transport belt (4), the brush roller (17) rotates clockwise.

14. A laser punching device comprising a main body (21), transport rollers (22) arranged on the main body (21), a laser system (23), a winder (24), an unwinder (25), and functional rollers, **characterized in that** it comprises a vacuum conveyor as defined in claims 1-9, wherein the functional rollers constitute a guide roller (26) for the web (27) of material, a waste matrix (32) roller (28), a delamination roller (29), and/or a lamination roller (30).

15. The laser punching device according to the claim 14, **characterized in that** the functional rollers are mounted in the mounting openings (9).

## Patentansprüche

1. Ein Vakuumförderer zum Transportieren eines Stegs (27) von Material, umfassend eine Antriebstrommel (1) und eine Spanntrommel (2), die zwischen zwei Befestigungsplatten (3) angeordnet sind, ein zwischen der Antriebstrommel (1) und der Spanntrommel (2) gedehntes Transportband (4), einen zwischen der Antriebstrommel (1) und der Spanntrommel (2) in Kontakt mit der oberen Innenseite des Transportbandes (4) angeordneten Schiebetisch (5), mindestens zwei auf der oberen Außenfläche des Transportbandes (4) im Bereich seiner Seitenkanten angeordneten Schiebeflachleisten (6), Vakuummittel und einen Fördererantrieb (7), wobei der Fördererantrieb (7) einen Zwei-Wege-Antrieb darstellt, wobei der Vakuumförderer ferner ein mechanisches Reinigungssystem und ein chemisches Reinigungssystem umfasst, **dadurch gekennzeichnet, dass** die Vakuummittel mindestens eine auf der oberen Innenseite des Transportbandes (4) unterhalb des Schiebetisches (5) angeordnete Vakuumkammer (10) umfassen, wobei mit der Vakuumkammer (10) eine Pumpe verbunden ist, um ein Vakuum zu erzeugen, und in den Schiebetisch (5) über seine gesamte Breite und Länge Längsschlitze (11) ausgebildet sind, um Luftstrom zwischen dem Schiebetisch (5) und der Vakuumkammer (10) bereitzustellen.

2. Der Vakuumförderer nach Anspruch 1, **dadurch gekennzeichnet, dass** mit der Längsachse der Spanntrommel (2) auf jeder Seite davon mindestens ein Bandspannungsaktor (8) verbunden ist, um die Spanntrommel (2) relativ zu der Antriebstrommel (1) zu bewegen und um das Transportband (4) zu spannen und zu führen.

3. Der Vakuumförderer nach einem der Ansprüche 1-2, **dadurch gekennzeichnet, dass** die Oberfläche des Transportbandes (4) in geraden, quer zu der Länge des Transportbandes (4) über seine gesamte Länge platzierten Reihen angeordnete Mikroperforationen (12) umfasst, die die Schlitze (11) des Schiebetisches (5) überlappen.

4. Der Vakuumförderer nach einem der Ansprüche 1-3, **dadurch gekennzeichnet, dass** er einen Bandführungssensor (13) umfasst, um die Überlappung der Schlitzen (11) auf dem Schiebetisch (5) mit den Mikroperforationen (12) des Transportbandes (4) zu detektieren.

5. Der Vakuumförderer nach einem der Ansprüche 1-4, **dadurch gekennzeichnet, dass** das mechanische Reinigungssystem mindestens zwei Streichmesser (14a, 14b) umfasst, um Schmutz von dem Transportband (4) abzukratzen, die quer zu dem Transportband auf dessen unterer Außenseite angeordnet sind und in einem Winkel α relativ zu dem Transportband (4) geneigt sind, wobei die Spitzen der Streichmesser (14a, 14b) voneinander abgewandt sind, wobei die Streichmesser (14a, 14b) unabhängig gesteuert werden.

6. Der Vakuumförderer nach Anspruch 5, **dadurch gekennzeichnet, dass** jedes Streichmesser (14a, 14b) mit einem Druckaktor (15a, 15b) versehen ist, um in Abhängigkeit von der Arbeitsrichtung des Vakuumförderers ihn zu drücken oder den Druck darauf zu lösen, wobei mindestens zwei Druckrollen (16a, 16b) in Kontakt mit der unteren Innenfläche des Transportbandes (4) angeordnet sind, um die Position des Transportbandes (4) ohne seine Verformung aufrechtzuerhalten.

7. Der Vakuumförderer nach einem der Ansprüche 5-6, **dadurch gekennzeichnet, dass** das Streichmesser (14a, 14b) ferner einen Getriebemotor umfasst, um ihm eine lineare Bewegung quer zu dem Transportband (4) aufzuprägen.

8. Der Vakuumförderer nach einem der Ansprüche 5-7, **dadurch gekennzeichnet, dass** der Winkel α von 10° bis 90° beträgt.

9. Der Vakuumförderer nach einem der Ansprüche 1-8, **dadurch gekennzeichnet, dass** das chemische Reinigungssystem eine unter der unteren Außenfläche des Transportbandes (4) angeordnete Bürstenrolle (17), die sich in der Richtung gemäß der Drehung des Transportbandes (4) dreht, eine Applikationsdüse (18) zum Applizieren des Reinigungsmittels auf die Bürstenrolle (17) und eine Saugpumpe (19) zum Entnehmen des Reinigungsmittelrückständs umfasst, und wobei sich auf beiden Seiten der Bürstenrolle (17) entlang der Querachse des Transportbandes (4) mindestens zwei Gummiabzieher (20) befinden, um überschüssiges Reinigungsmittel zu sammeln.

10. Ein Verfahren zum Reinigen des Vakuumförderers wie in Anspruch 9 definiert, wenn abhängig von einem der Ansprüche 5-8, **dadurch gekennzeichnet, dass** es Schritte umfasst, in denen:
a. Schmutz durch die Streichmesser (14a, 14b) abgekratzt wird,
b. ein Reinigungsmittel auf die Bürstenrolle (17) durch die Applikationsdüse (18) gesprüht wird,
c. Schmutz durch eine sich drehende Bürstenrolle (17) mit dem Reinigungsmittel entfernt wird,
d. überschüssiges Reinigungsmittel von der Oberfläche des Transportbandes (4) durch die Gummiabzieher (20) gesammelt wird.

11. Das Verfahren zum Reinigen des Vakuumförderers nach Anspruch 10, **dadurch gekennzeichnet, dass** der Reinigungsmittelrückstand durch eine Saugpumpe (19) entnommen wird.

12. Das Verfahren zum Reinigen des Vakuumförderers nach einem der Ansprüche 10-11, **dadurch gekennzeichnet, dass** während der Bewegung im Gegenuhrzeigersinn des Transportbandes (4) das linke Streichmesser (14a) gedrückt wird und das rechte Streichmesser (14b) gelöst wird, wobei während der Bewegung im Uhrzeigersinn des Transportbandes (4) das rechte Streichmesser (14b) gedrückt wird und das linke Streichmesser (14a) gelöst wird.

13. Das Verfahren zum Reinigen des Vakuumförderers nach einem der Ansprüche 10-12, **dadurch gekennzeichnet, dass** sich während der Bewegung im Gegenuhrzeigersinn des Transportbandes (4) die Bürstenrolle (17) im Gegenuhrzeigersinn dreht, wobei sich während der Bewegung des Transportbandes (4) im Uhrzeigersinn die Bürstenrolle (17) im Uhrzeigersinn dreht.

14. Eine Laserstanzvorrichtung, umfassend einen Hauptkörper (21), auf dem Hauptkörper (21) angeordnete Transportrollen (22), ein Lasersystem (23), einen Aufwickler (24), einen Abwickler (25) und Funktionsrollen, **dadurch gekennzeichnet, dass** sie einen Vakuumförderer wie in Ansprüchen 1-9 definiert umfasst, wobei die Funktionsrollen eine Führungsrolle (26) für den Steg (27) von Material, eine Rolle (28) einer Abfallmatrix (32), eine Delaminierungsrolle (29) und/oder eine Laminierungsrolle (30) darstellen.

15. Die Laserstanzvorrichtung nach Anspruch 14, **dadurch gekennzeichnet, dass** die Funktionsrollen in den Montageöffnungen (9) montiert sind.

## Revendications

1. Convoyeur à vide pour le transport d'une bande (27) de matériau, comprenant un tambour d'entraînement (1) et un tambour de tension (2) disposés entre deux plaques de fixation (3), une bande de transport (4) tendue entre le tambour d'entraînement (1) et le tambour de tension (2), une table coulissante (5) disposée entre le tambour moteur (1) et le tambour de tension (2) en contact avec la face interne supérieure de la bande de transport (4), au moins deux plaques coulissantes (6) disposées sur la face externe supérieure de la bande de transport (4) au niveau de ses bords latéraux, un dispositif d'aspiration et un entraînement de convoyeur (7), dans lequel l'entraînement du convoyeur (7) constitue un entraînement bidirectionnel, dans lequel le convoyeur à vide comprend en outre un système de nettoyage mécanique et un système de nettoyage chimique, **caractérisé en ce que** les moyens d'aspiration comprennent au moins une chambre à vide (10) disposée sur le côté intérieur supérieur de la bande de transport (4) sous la table coulissante (5), dans laquelle une pompe est connectée à la chambre à vide (10) pour créer un vide, et des fentes longitudinales (11) sont formées dans la table coulissante (5) sur toute sa largeur et sa longueur pour assurer la circulation de l'air entre la table coulissante (5) et la chambre à vide (10).

2. Convoyeur à vide selon la revendication 1, **caractérisé en ce qu'**au moins un actionneur de tension de la bande (8) est relié à l'axe longitudinal du tambour de tension (2) de chaque côté de celui-ci pour déplacer le tambour de tension (2) par rapport au tambour d'entraînement (1) et pour tendre et guider la bande de transport (4).

3. Convoyeur à vide selon l'une des revendications 1-2, **caractérisé en ce que** la surface de la bande de transport (4) comprend des microperforations (12) disposées en rangées paires placées transversalement à la longueur de la bande de transport (4) sur toute sa longueur, qui chevauchent les fentes (11) de la table coulissante (5).

4. Convoyeur à vide selon l'une des revendications 1-3, **caractérisé en ce qu'**il comprend un capteur (13) de guidage de la bande pour détecter le chevauchement des fentes (11) de la table coulissante (5) avec les microperforations (12) de la bande de transport (4).

5. Convoyeur à vide selon l'une des revendications 1-4, **caractérisé en ce que** le système de nettoyage mécanique comprend au moins deux racles (14a, 14b) pour racler les débris de la bande de transport (4), disposées transversalement à la bande de transport, sur son côté extérieur inférieur, et inclinées à un angle a par rapport à la bande de transport (4), dans lequel les pointes des racles (14a, 14b) sont opposées l'une à l'autre, les racles (14a, 14b) étant commandées de manière indépendante.

6. Convoyeur à vide selon la revendication 5, **caractérisé en ce que** chaque racle (14a, 14b) est équipé d'un actionneur de pression (15a, 15b) pour appuyer ou relâcher la pression en fonction de la direction de travail du convoyeur à vide, dans lequel au moins deux rouleaux de pression (16a, 16b) sont disposés en contact avec la surface intérieure inférieure de la bande de transport (4) pour maintenir la position de la bande de transport (4) sans la déformer.

7. Convoyeur à vide selon l'une des revendications 5-6, **caractérisé en ce que** la racle (14a, 14b) comprend en outre un motoréducteur pour lui donner un mouvement linéaire par rapport à la bande de transport (4).

8. Convoyeur à vide selon l'une des revendications 5-7, **caractérisé en ce que** l'angle a est compris entre 10° et 90°.

9. Convoyeur à vide selon l'une des revendications 1-8, **caractérisé en ce que** le système de nettoyage chimique comprend un rouleau-brosse (17) disposé sous la surface extérieure inférieure de la bande de transport (4), qui tourne dans le sens de la rotation de la bande de transport (4), une buse d'application (18) pour appliquer le produit de nettoyage sur le rouleau-brosse (17), et une pompe d'aspiration (19) pour extraire les résidus de produit de nettoyage, et dans lequel au moins deux tirettes en caoutchouc (20) sont situées des deux côtés du rouleau-brosse (17), le long de l'axe transversal de la bande de transport (4), pour collecter l'excédent de produit de nettoyage.

10. Procédé de nettoyage du convoyeur à vide telle que définie dans la revendication 9 lorsqu'elle dépend de l'une des revendications 5-8, **caractérisée en ce qu'**elle comprend des étapes au cours desquelles :
a) les débris sont raclés par les racloirs (14a, 14b),
b) un produit de nettoyage est pulvérisé sur le rouleau de la brosse (17) par la buse d'application (18),
c) les débris sont éliminés par un rouleau-brosse rotatif (17) avec le produit de nettoyage,
d) l'excédent de produit de nettoyage est recueilli à la surface de la bande de transport (4) par les tirettes en caoutchouc (20).

11. Procédé de nettoyage du convoyeur à vide selon la revendication 10, **caractérisé en ce que** les résidus de produit de nettoyage sont aspirés par une pompe d'aspiration (19).

12. Procédé de nettoyage du convoyeur à vide selon l'une des revendications 10 à 11, **caractérisé en ce que**, lors du déplacement de la bande de transport (4) dans le sens inverse des aiguilles d'une montre, la racle gauche (14a) est pressée et la racle droite (14b) est libérée, et que, lors du déplacement de la bande de transport (4) dans le sens des aiguilles d'une montre, la racle droite (14b) est pressée et la racle gauche (14a) est libérée.

13. Procédé de nettoyage du convoyeur à vide selon l'une des revendications 10-12, **caractérisée par le fait que** pendant le mouvement de la bande de transport (4) dans le sens inverse des aiguilles d'une montre, le rouleau-brosse (17) tourne dans le sens inverse des aiguilles d'une montre et que pendant le mouvement de la bande de transport (4) dans le sens des aiguilles d'une montre, le rouleau-brosse (17) tourne dans le sens des aiguilles d'une montre.

14. Dispositif de poinçonnage au laser comprenant un corps principal (21), des rouleaux de transport (22) disposés sur le corps principal (21), un système laser (23), un enrouleur (24), un dérouleur (25) et des rouleaux fonctionnels, **caractérisé en ce qu'**il comprend un convoyeur à vide tel que défini dans les revendications 1-9, dans lequel les rouleaux fonctionnels constituent un rouleau de guidage (26) pour la bande (27) de matériau, un rouleau de matrice de déchets (32) (28), un rouleau de délaminage (29), et/ou un rouleau de laminage (30).

15. Dispositif de poinçonnage au laser selon la revendication 14, **caractérisé en ce que** les rouleaux fonctionnels sont montés dans les ouvertures de montage (9).
